# FASCICULE DE BREVET EUROPEEN

(11) **EP 1 574 878 B1**
(45) Date de publication et mention de la délivrance du brevet: **02.12.2009**
(21) Numéro de dépôt: 05290476.0
(22) Date de dépôt: 03.03.2005
(51) Int. Cl.: G01V 3/12, G01V 3/15

(54) **Dispositif permettant de déterminer la présence d'une cavité sous une voie de circulation**
Gerät zur Bestimmung eines Hohlraums unter einem Verkehrsweg
Device for determining the presence of a cavity under a roadway or a railway

(30) Priorité: 09.03.2004 FR 0402413
(43) Date de publication de la demande: 14.09.2005
(73) Titulaire: Geoscan, 91430 Igny (FR)
(72) Inventeur: Foillard, René, 91530 Saint-Cheron (FR)
(74) Mandataire: Flavenot, Bernard

(56) Documents cités:
- WO-A-99/01781
- DE-C- 19 740 083
- US-A- 6 100 839
- US-A1- 2002 196 177
- PATENT ABSTRACTS OF JAPAN vol. 013, no. 135 (P-851), 5 avril 1989 (1989-04-05) -& JP 63 304188 A (OSAKA GAS CO LTD), 12 décembre 1988 (1988-12-12)
- PATENT ABSTRACTS OF JAPAN vol. 008, no. 192 (P-298), 4 septembre 1984 (1984-09-04) -& JP 59 079871 A (HIDEO MIYAMOTO), 9 mai 1984 (1984-05-09)

## Description

La présente invention concerne les dispositifs permettant de déterminer, à la volée, la présence ou non d'une cavité dans le sous-sol d'une voie de tout type, notamment cependant de circulation, réalisée en surface d'un sol, qui trouvent une application particulièrement avantageuse pour déterminer la présence ou non de cavités dans le sous-sol des voies de chemin de fer ou analogues.

Il existe des voies de circulation de tout type pour tous corps, objets, éléments, etc. Parmi toutes ces voies, on peut citer, notamment dans le cadre d'une application préférentielle de la présente invention, les voies de chemin de fer parcourues par des convois de wagons pour voyageurs et/ou marchandises.

Ces voies sont recouvertes d'un ballast ou analogue pour obtenir la stabilité des traverses qui maintiennent les rails. Or, du fait notamment des vibrations produites par le passage des convois, mais aussi des infiltrations d'eau de pluie, des ruissellements, etc., il peut se créer, en dessous de la surface de ces voies, des cavités qui sont presque toujours invisibles et qui peuvent s'agrandir dans le temps, au risque d'entraîner un affaissement du sous-sol jusqu'à la surface qui ne joue plus son rôle de soutien de la voie, c'est-à-dire du ballast pour les voies de chemin de fer ou du bitume pour les voies de circulation des automobiles, et même de créer de graves accidents.

Aussi est-il nécessaire de pouvoir détecter la présence de telles cavités le plus tôt possible dès leur naissance, avant que leurs dimensions ne provoquent des affaissements du sol.

Pour ce faire, on a pensé utiliser la méthode de la détection par radar qui est bien connue, notamment dans la détection d'objets enfouis en sous-sol. Un dispositif utilisant cette technique est décrit dans les documents US 2002/196177 et WO 99/01781.

Cette technique donne en général de bons résultats dans de nombreux cas pour détecter la présence d'objets, mais présente des lacunes pour la détection de cavités.

Aussi, la présente invention a-t-elle pour but de réaliser un dispositif permettant de déterminer, à la volée, la présence ou non d'une cavité en sous-sol d'une voie de circulation, comme par exemple une voie de chemin de fer ou analogue, qui utilise la technique de la détection dite "par radar" mais pallie les inconvénients des dispositifs de l'art antérieur réalisés jusqu'à ce jour.

Plus précisément, la présente invention a pour objet un dispositif permettant de déterminer, à la volée, la présence ou non d'une cavité en sous-sol d'une voie de circulation, par exemple une voie de chemin de fer ou analogue, en accord avec la revendication 1 annexée.

D'autres caractéristiques et avantages de l'invention apparaîtront au cours de la description suivante donnée en regard des dessins annexés à titre illustratif mais nullement limitatif, dans lesquels :
La figure 1 représente le bloc diagramme fonctionnel du dispositif selon l'invention permettant de déterminer, à la volée, la présence ou non d'une cavité en sous-sol d'une voie de circulation,
Les figures 2 et 3 représentent, sous forme schématique, respectivement en vue de dessus et en vue de côté en coupe référencée II-II sur la figure 2, un mode de réalisation préférentiel du dispositif selon l'invention en accord avec la figure 1,
La figure 4 représente, dans une vue en coupe transversale schématique, une partie du dispositif selon l'invention en accord avec les figures 2 et 3, cette coupe étant référencée III-III sur la figure 2,
La figure 5 représente le bloc diagramme fonctionnel des moyens de commande et de traitement de signaux entrant dans la constitution du dispositif selon l'invention en accord avec la figure 1,
La figure 6 est une représentation graphique de trois fonctions permettant d'expliciter le fonctionnement du dispositif selon l'invention, et
La figure 7 représente, vue en perspective, une réalisation préférentielle d'une des antennes entrant dans la constitution du dispositif selon l'invention.

Il est tout d'abord précisé que, sur les figures, les mêmes références désignent les mêmes éléments, quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

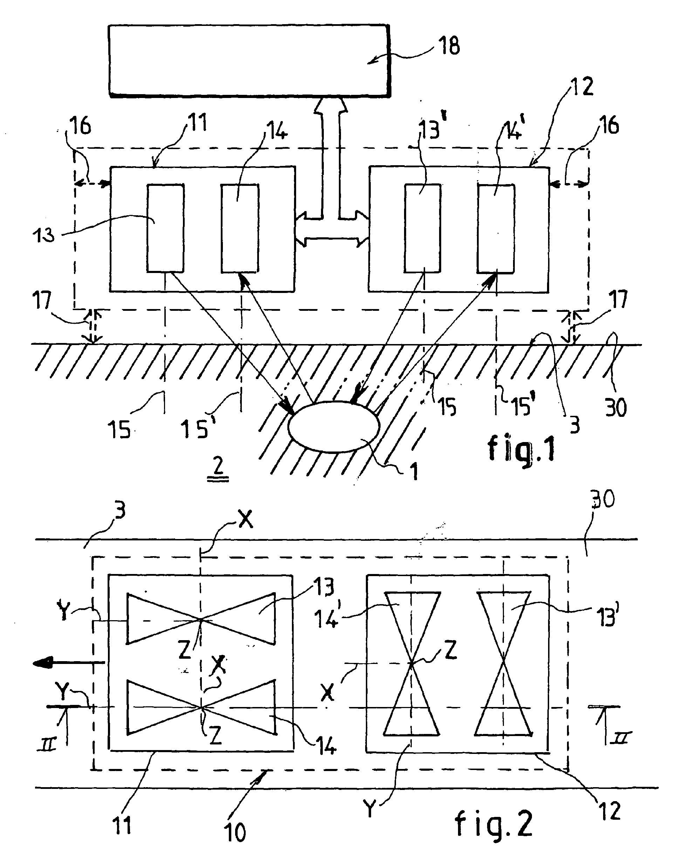

La figure 1 représente le schéma bloc fonctionnel du dispositif selon l'invention pour déterminer, à la volée, la présence ou non d'une cavité 1 en sous-sol 2 d'une voie de circulation 3, comme par exemple une voie de chemin de fer ou analogue.

Le dispositif comporte, comme représenté de façon schématique sur cette figure 1, un châssis 10, deux premier et second ensembles d'antennes 11, 12, chaque ensemble d'antennes 11, 12 comprenant une antenne émettrice 13, 13' et une antenne réceptrice 14, 14', les quatre antennes ayant chacune une direction dite privilégiée d'émission et de réception 15, 15', des moyens 16 pour associer les deux ensembles d'antennes 11, 12 au châssis 10, des moyens 17 pour déplacer le châssis par rapport à la surface de la voie, et des moyens 18 pour alimenter l'antenne émettrice 13, 13' de chaque ensemble d'antennes 11, 12 et traiter les signaux délivrés par les antennes réceptrices 14, 14' des deux ensembles d'antennes en vue de déterminer la présence ou non d'une cavité 1 en sous-sol 2.

De façon tout à fait préférentielle et avantageuse, les deux premier et second ensembles d'antennes 11, 12 sont sensiblement identiques, et les quatre antennes 13, 13', 14, 14' ont une structure géométrique sensiblement identique à laquelle est attaché de façon identique un référentiel spatial à trois axes de référence, par exemple les trois axes X, Y et Z illustrés sur la figure 2, de préférence orthogonaux.

De plus, pour obtenir de bons résultats comme il sera explicité ci-après, les deux antennes respectivement émettrice 13, 13' et réceptrice 14, 14' d'un ensemble d'antennes 11, 12 sont disposées l'une par rapport à l'autre de façon que les axes de référence correspondants X-X et Y-Y selon l'exemple pris ci-avant, des deux référentiels spatiaux soient respectivement sensiblement parallèles entre eux, figure 2.

Il est aussi avantageux, comme dans la représentation selon la figure 2, que les deux ensembles d'antennes 11, 12 soient associés au châssis de façon que deux des trois axes de référence, par exemple les axes X et Y avec l'exemple donné ci-dessus, des deux référentiels spatiaux en X, Y, et Z attachés respectivement aux structures des deux antennes émettrice et réceptrice d'un ensemble d'antennes soient respectivement perpendiculaires aux deux axes de référence correspondants X et Y des deux référentiels spatiaux attachés aux structures des deux antennes émettrice et réceptrice de l'autre ensemble d'antennes, et que les troisièmes axes de référence, c'est-à-dire les axes Z, des quatre référentiels spatiaux soient sensiblement parallèles.

Selon une réalisation préférentielle et avantageuse, les moyens 16 pour associer les deux ensembles d'antennes au châssis 10 sont agencés de façon que les directions privilégiées données d'émission et de réception 15, 15', figures 1, 2 et 3, respectivement des quatre antennes 13, 13', 14, 14' soient sensiblement perpendiculaires à la surface 30 de la voie 3 lors du déplacement du châssis 10 par rapport à cette voie.

Dans le but d'améliorer la qualité des signaux obtenus pour la détermination de la présence ou non d'une cavité en sous-sol, notamment le rapport "signal sur bruit", notion bien connue en elle-même des hommes du métier, du ou des signaux de mesure comme explicité ci-après, le dispositif comporte en outre au moins une couche 40 (uni-couche ou multicouches) d'un matériau comportant un milieu diélectrique et des moyens pour associer cette couche avec les antennes 13-14 de façon qu'elle soit située entre ces antennes et la surface 30 de la voie 3 lors du déplacement du châssis 10 par rapport à cette voie.

Cette couche 40 comportant un milieu diélectrique est constituée par exemple d'un matériau cellulosique alvéolé imbibé d'un fluide ayant une permittivité de valeur sensiblement égale à "33". Elle peut être constituée à la manière d'une couche unique, comme un tissu ou analogue, ou de plusieurs couches les unes sur les autres, ou bien d'un tapis de fibres orientées sensiblement perpendiculairement à la surface de la voie lors du déplacement du châssis par rapport à cette voie.

De façon préférentielle, le fluide à permittivité de valeur sensiblement égale à "33" est de l'eau.

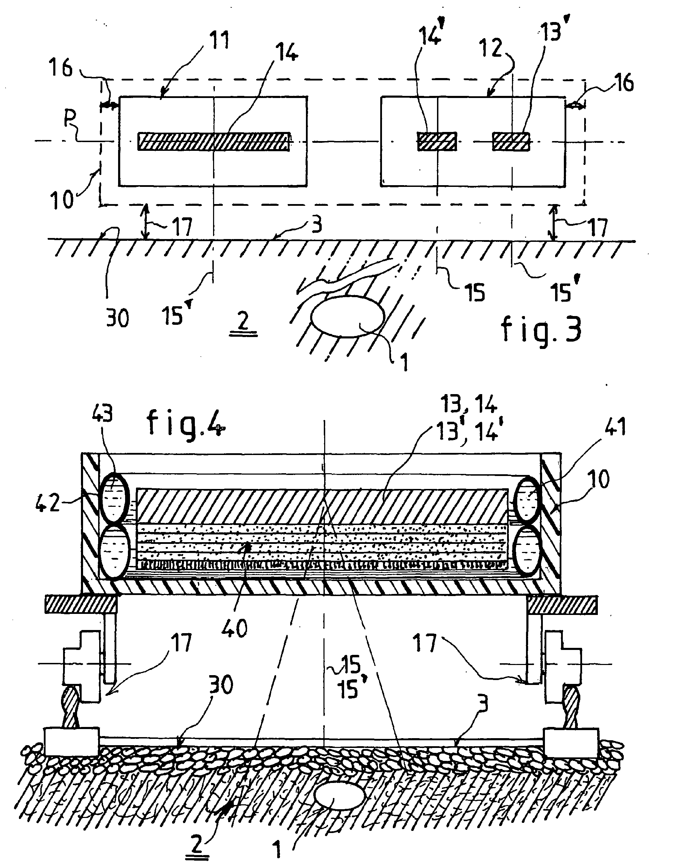

En outre, pour éviter que les ondes électromagnétiques qui peuvent régner au voisinage d'une voie, par exemple mais non exclusivement une voie de chemin de fer électrique, ne parasitent de façon importante les ondes électromagnétiques émises ou reçues par les antennes et ne donnent en sortie des signaux parasites d'intensité élevée, il est préférable que le dispositif comporte en outre une cellule de garde 41 qui entoure au moins partiellement, par exemple latéralement, comme illustré sur la figure 4, chaque ensemble d'antenne 11, 12, ou les deux à la fois.

A titre d'exemple de réalisation préférentielle, la cellule de garde 41 est constituée par au moins une enveloppe 42 formant un manchon entourant l'ensemble d'antennes, cette enveloppe 42 étant réalisée en un matériau électriquement neutre, notamment en un matériau non magnétique, isolant électriquement et plus particulièrement absorbant les ondes électromagnétiques, et un fluide 43 ayant une permittivité de valeur avantageusement sensiblement égale à "33", comme de l'eau ou analogue, contenu dans l'enveloppe 42.

Comme mentionné auparavant, le dispositif comporte des moyens 18 pour alimenter l'antenne émettrice 13, 13' de chaque ensemble d'antennes 11, 12 et traiter les signaux délivrés par l'antenne réceptrice de chaque ensemble d'antennes en vue de déterminer la présence ou non d'une cavité 1. Ces derniers moyens 18 sont agencés de façon que l'antenne émettrice 13, 13' d'un ensemble 11, 12 soit couplée à l'antenne réceptrice 14', 14 de l'autre ensemble 12, 11.

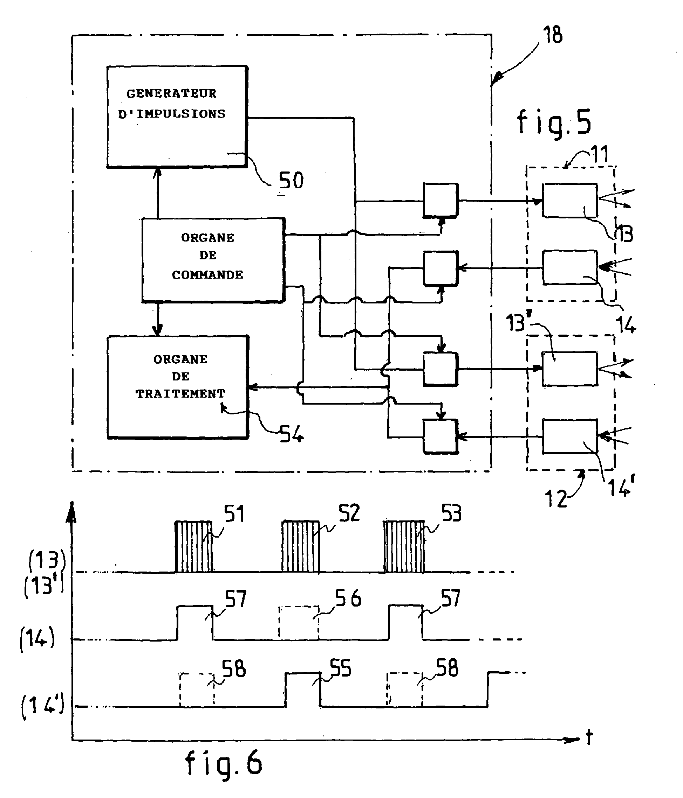

Notamment, ces moyens 18 sont constitués, figures 5 et 6, par un générateur 50 apte à délivrer au moins deux impulsions successives 51, 52, 53, ..., par exemple à la fréquence de 50 KHz et modulées en haute fréquence, par exemple à la fréquence de 200 MHz, alimentant respectivement les antennes émettrices 13, 13' des deux ensembles d'antennes 11, 12, pour commander l'émission d'une onde de détection de cavité 1 respectivement par l'antenne émettrice 13 du premier ensemble 11 et par l'antenne émettrice 13' du second ensemble 12, et des moyens 54 pour analyser, d'une part les signaux 55 délivrés par l'antenne réceptrice 14' du second ensemble 12 tout en neutralisant les signaux 56 délivrés par l'antenne réceptrice 14 du premier ensemble 11, et d'autre part les signaux 57 délivrés par l'antenne réceptrice 14 du premier ensemble 11 tout en neutralisant les signaux 58 délivrés par l'antenne réceptrice 14' du second ensemble 12.

Les moyens illustrés sur la figure 5 sont bien connus en eux-mêmes et ne seront donc pas plus amplement décrits dans la présente description, ni illustrés, dans l'unique souci de simplifier cette description.

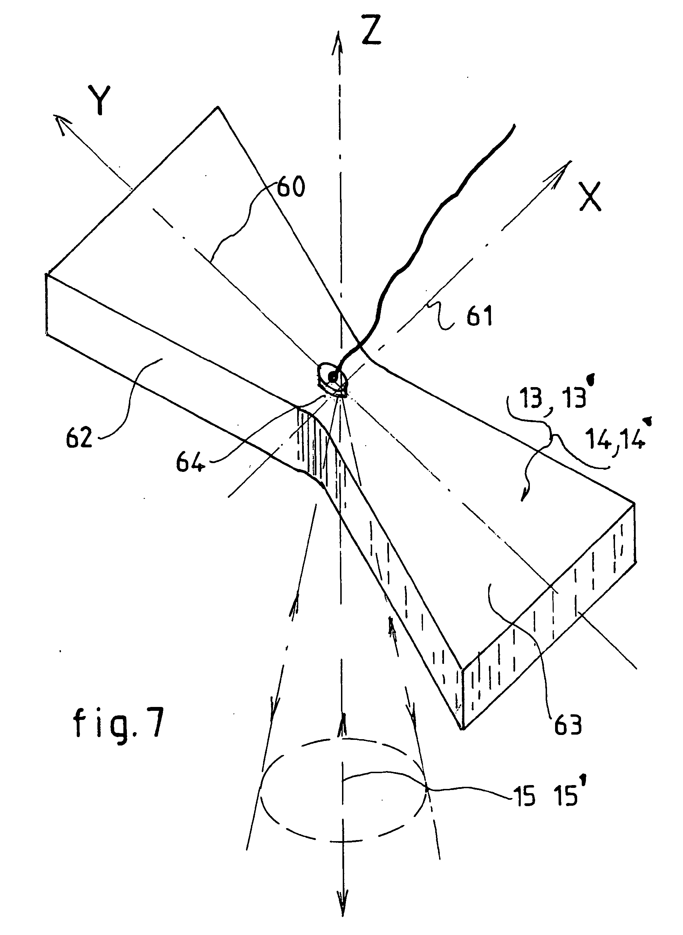

Il est illustré, sur la figure 7, un exemple préférentiel de réalisation d'une antenne, aussi bien d'émission que de réception, pouvant entrer dans la constitution du dispositif selon l'invention. Selon ce mode de réalisation avantageux par sa simplicité, chaque antenne est réalisée dans une plaque plane en matériau électriquement conducteur, par exemple du cuivre ou analogue, en précisant que ce dernier matériau peut même être supraconducteur, et affecte la forme d'une figure géométrique ayant au moins deux plans de symétrie perpendiculaires 60, 61. Cette figure géométrique est essentiellement constituée de deux triangles isocèles 62, 63 sensiblement identiques opposés par leur sommet principal 64.

En outre, selon une caractéristique de l'invention, les quatre antennes 13, 13', 14, 14' constituées de plaques planes comme mentionné ci-dessus, sont situées sensiblement dans un même plan P, figure 3, qui est choisi de façon qu'il soit parallèle à la surface 30 de la voie 3 lors du déplacement du châssis 10 par rapport à cette voie.

Le fonctionnement du dispositif décrit ci-dessus s'explique de la façon suivante :

D'une façon générale, une onde sous forme d'une impulsion électromagnétique émise par une antenne émettrice 13, 13' se propage dans les matériaux du sous-sol 2. Dès qu'elle rencontre des changements dans les propriétés diélectriques du milieu constitué par ces matériaux, comme ceux induits par une cavité 1 dans le sous-sol, une partie de cette onde est réfléchie et l'autre partie est transmise. Une telle onde réfléchie permet de déterminer la présence d'une cavité et l'utilisation d'un nombre important d'impulsions d'ondes électromagnétiques tout en déplaçant les antennes en surface du sol permet de déterminer la forme de la cavité détectée. Le déplacement des antennes est obtenu en déplaçant le châssis 10 en surface 30 de la voie 3.

En outre, après étalonnage, le temps écoulé entre l'émission de l'onde par l'antenne émettrice et la réception, par l'antenne réceptrice, de l'onde réfléchie permet de calculer la distance entre la surface 30 et la cavité 1.

Les impulsions d'onde émises par les antennes émettrices sont de très courte durée (1 à 5 nsec), de large bande et centrées sur une fréquence pouvant aller de 80 MHz à 1 GHz selon l'antenne utilisée. Ces impulsions sont envoyées vers le sol avec une fréquence de répétition très élevée.

Les signaux délivrés par les antennes réceptrices 14, 14' sont par exemple restitués sur un écran vidéo ou sur un enregistreur graphique et/ou un enregistreur magnétique pour en effectuer ultérieurement les traitements aux fins de déterminer la présence, ou non, de cavités dans le sous-sol, et de les localiser.

Il en résulte une représentation des résultats sous forme de profils continus où l'axe horizontal représente la distance le long du profil, et l'axe vertical est l'axe des temps.

On a donc une coupe temps quasi-continue, qui peut être transformée en coupe profondeur à condition de connaître les vitesses de propagation.

Avec le dispositif selon l'invention comportant les caractéristiques structurelles qui ont été décrites ci-dessus, un nombre important de cavités ont été détectées, qui ne l'avaient pas été avec les dispositifs selon l'art antérieur, notamment par le fait que, avec le dispositif selon l'invention, il est possible de détecter les ondes réfléchies qui ont été polarisées à quatre-vingt-dix degrés après réflexion sur les dioptres de séparation des cavités avec le matériau du sous-sol.

## Revendications

1. Dispositif permettant de déterminer, à la volée, par appareil du type radar, la présence ou non d'une cavité (1) en sous-sol (2) d'une voie de circulation (3), comme par exemple une voie de chemin de fer ou analogue, une cavité étant une absence de tout objet matériel enfoui dans le sous-sol, comportant :
• un châssis (10),
• deux premier et second ensembles d'antennes (11, 12) sensiblement identiques, chaque ensemble d'antennes (11, 12) comprenant une antenne émettrice (13, 13') et une antenne réceptrice (14, 14'), les quatre antennes (13, 13', 14, 14') ayant chacune une direction dite privilégiée d'émission et de réception (15, 15'), ces quatre antennes ayant une structure géométrique sensiblement identique à laquelle est attaché de façon identique un référentiel spatial à trois axes de référence, les deux antennes respectivement émettrice (13, 13') et réceptrice (14, 14') d'un ensemble d'antennes étant disposées l'une par rapport à l'autre de façon que les axes de référence correspondants des deux référentiels spatiaux soient respectivement sensiblement parallèles entre eux,
• des moyens (16) pour associer les deux dits ensembles d'antennes (11, 12) audit châssis (10), ces derniers moyens (16) étant agencés de façon que les directions privilégiées données d'émission et de réception (15 15') respectivement des quatre antennes (13, 13', 14, 14') soient sensiblement perpendiculaires à la surface (30) de la voie (3) lors du déplacement du châssis (10) par rapport à cette voie, les deux dits ensembles d'antennes (11, 12) étant associés au châssis de façon que deux des trois axes de référence des deux référentiels spatiaux attachés respectivement aux structures des deux antennes émettrice et réceptrice d'un ensemble d'antennes soient respectivement perpendiculaires aux deux axes de référence correspondants des deux référentiels spatiaux attachés respectivement aux structures des deux antennes émettrice et réceptrice de l'autre ensemble d'antennes, et que les troisièmes axes de référence des quatre référentiels spatiaux soient sensiblement parallèles,
• des moyens (17) pour déplacer ledit châssis par rapport à la surface de ladite voie, et
• des moyens (18) pour alimenter l'antenne émettrice (13, 13') de chaque ensemble d'antennes (11, 12) et traiter les signaux délivrés par les antennes réceptrices (14, 14') des deux ensembles d'antennes en vue de déterminer la présence ou non d'une cavité (1) en sous-sol (2), ces antennes réceptrices étant agencées pour détecter les ondes obtenues après réflexion, sur les dioptres de séparation des cavités avec le matériau du sous-sol, des ondes émises par les antennes émettrices, et qui ont été polarisées à quatre-vingt-dix degrés après réflexion.

2. Dispositif selon la revendication 1, **caractérisé par le fait qu'**il comporte au moins une couche (40) d'un matériau comportant un milieu diélectrique et des moyens pour associer ladite couche avec lesdites antennes (13-14) de façon qu'elle soit située entre ces dites antennes et la surface (30) de la voie (2) lors du déplacement du châssis (10) par rapport à cette voie.

3. Dispositif selon la revendication 2, **caractérisé par le fait que** ladite couche de matériau (40) comportant un milieu diélectrique est constituée d'un matériau cellulosique alvéolé imbibé d'un fluide à permittivité de valeur sensiblement égale à "33".

4. Dispositif selon la revendication 3, **caractérisé par le fait que** le matériau cellulosique alvéolé est constitué d'un tapis de fibres, lesdites fibres étant orientées sensiblement perpendiculairement à la surface de la voie lors du déplacement du châssis par rapport à cette voie.

5. Dispositif selon l'une des revendications 3 et 4, **caractérisé par le fait que** ledit fluide à permittivité de valeur sensiblement égale à "33" est de l'eau.

6. Dispositif selon l'une des revendications 1 à 5, **caractérisé par le fait qu'**au moins un ensemble d'antennes (11, 12) est entouré au moins partiellement d'une cellule de garde (41).

7. Dispositif selon la revendication 6, **caractérisé par le fait que** ladite cellule de garde (41) est constituée par au moins une enveloppe (42) formant un manchon entourant l'ensemble d'antennes, ladite enveloppe (42) étant réalisée en un matériau électriquement neutre, et un fluide (43) ayant une permittivité de valeur sensiblement égale à "33" contenu dans ladite enveloppe.

8. Dispositif selon l'une des revendications 1 à 7, **caractérisé par le fait que** les moyens (18) pour alimenter l'antenne émettrice (13, 13') de chaque ensemble d'antennes (11, 12) et traiter les signaux délivrés par l'antenne réceptrice de chaque ensemble d'antennes en vue de déterminer la présence ou non d'une cavité (1), sont agencés de façon que l'antenne émettrice (13, 13') d'un ensemble (11, 12) soit couplée à l'antenne réceptrice (14', 14) de l'autre ensemble (12, 11).

9. Dispositif selon la revendication 8, **caractérisé par le fait que** les moyens (18) pour alimenter l'antenne émettrice de chaque ensemble d'antennes et traiter les signaux délivrés par l'antenne réceptrice de chaque ensemble d'antennes en vue de déterminer la présence ou non d'une cavité, qui sont agencés pour que l'antenne émettrice d'un ensemble soit couplée à l'antenne réceptrice de l'autre ensemble, sont constitués par :
un générateur (50) apte à délivrer au moins deux impulsions successives (51, 52, 53, ..) modulées en haute fréquence alimentant respectivement les antennes émettrices (13, 13') des deux ensembles d'antennes (11, 12), pour commander l'émission d'une onde de détection de cavité (1) respectivement par l'antenne émettrice (13) du premier ensemble (11) et par l'antenne émettrice (13') du second ensemble (12), et
des moyens (54) pour analyser, d'une part les signaux (55) délivrés par l'antenne réceptrice (14') du second ensemble (12) tout en neutralisant les signaux (56) délivrés par l'antenne réceptrice (14) du premier ensemble (11), et d'autre part les signaux (57) délivrés par l'antenne réceptrice (14) du premier ensemble (11) tout en neutralisant les signaux (58) délivrés par l'antenne réceptrice (14') du second ensemble (12).

10. Dispositif selon l'une des revendications 1 à 9, **caractérisé par le fait que** chaque antenne est réalisée dans une plaque plane et affecte la forme d'une figure géométrique ayant au moins deux plans de symétrie perpendiculaires (60, 61).

11. Dispositif selon la revendication 10, **caractérisé par le fait que** ladite figure géométrique est constituée de deux triangles isocèles (62, 63) sensiblement identiques opposés par leur sommet principal (64).

12. Dispositif selon l'une des revendications 10 et 11, **caractérisé par le fait que** les quatre antennes (13, 13', 14, 14'), constituées de plaques planes, sont situées sensiblement dans un même plan (P).

## Claims

1. A device using radar type apparatus making it possible, while in motion, to determine the presence or the absence of a cavity (1) in the subsoil (2) of a traffic path (3), such as for example a railway track or the like, where a cavity is an absence of any material object buried in the subsoil, the device comprising:
a frame (10);
two first and second substantially identical antenna sets (11, 12), each antenna set (11, 12) comprising a transmitter antenna (13, 13') and a receiver antenna (14, 14'), each of the four antennas (13, 13', 14, 14') having a so-called "privileged" direction (15, 15') for transmission or reception, these four antennas being of substantially identical geometrical structure, each linked in identical manner with a three-dimensional frame of reference having three reference axes, the two antennas of an antenna set, i.e. its transmitter antenna (13, 13') and its receiver antenna (14, 14'), being disposed relative to each other in such a manner that the corresponding reference axes of their two three-dimensional frames of reference are respectively substantially mutually parallel;
means (16) for associating both of said antenna sets (11, 12) with said frame (10), said means (16) being arranged in such a manner that the respective given privileged directions (15, 15') for transmission and reception of the four antennas (13, 13', 14, 14') are substantially perpendicular to the surface (30) of the path (3) when the frame (10) moves relative to said path, said two antenna sets (11, 12) being associated with the frame in such a manner that two of the three reference axes of the two three-dimensional frames of reference linked respectively with the structures of the two antennas of an antenna set, i.e. the transmitter antenna and the receiver antenna, are respectively perpendicular to the two corresponding reference axes of the two three-dimensional frames of reference linked respectively with the structures of the two antennas of the other antenna set, i.e. the transmitter antenna and the receiver antenna, and that the third reference axes of all four three-dimensional frames of reference are substantially parallel;
means (17) for moving said frame relative to the surface of said path; and
means (18) for feeding the transmitter antenna (13, 13') of each antenna set (11, 12) and means for processing the signals delivered by the receiver antennas (14, 14') of the two antenna sets in order to determine the presence or absence of a cavity (1) in the subsoil (2), said receiver antennas being arranged to detect waves that are obtained as a result of the waves transmitted by the transmitter antennas being reflected on the boundary surfaces separating cavities from material in the subsoil, and that are polarized at 90° after reflection.

2. A device according to claim 1, **characterized by** the fact that it includes at least one layer (40) of a material including a dielectric medium, and means for associating said layer with said antennas (13-14) in such a manner as to be situated between said antennas and the surface (30) of the path (2) during movement of the frame (10) relative to said path.

3. A device according to claim 2, **characterized in that** said layer of material (40) including a dielectric medium is constituted by a cellulose material soaked in a fluid having permittivity of a value substantially equal to "33".

4. A device according to claim 3, **characterized by** the fact that the cellular cellulose material is constituted by a mat of fibers, said fibers being oriented substantially perpendicularly to the surface of the path during the movement of the frame relative to said path.

5. A device according to claim 3 or claim 4, **characterized by** the fact that said fluid having permittivity of value substantially equal to "33" is water.

6. A device according to any one of claims 1 to 5, **characterized by** the fact that at least one antenna set (11, 12) is surrounded at least in part by a guard cell (41).

7. A device according to claim 6, **characterized by** the fact that said guard cell (41) is constituted by at least one casing (42) forming a sleeve surrounding the antenna set, said casing (42) being made of a material that is electrically neutral, and a fluid (43) having permittivity of value substantially equal to "33" contained in said casing.

8. A device according to any one of claims 1 to 7, **characterized by** the fact that the means (18) for feeding the transmitter antenna (13, 13') of each antenna set (11, 12) and the means for processing the signals delivered by the receiver antenna of each antenna set in order to determine the presence or absence of a cavity (1) are arranged in such a manner that the transmitter antenna (13, 13') of each set (11, 12) is coupled to the receiver antenna (14', 14) of the other set (12, 11).

9. A device according to claim 8, **characterized by** the fact that the means (18) for feeding the transmitter antenna of each antenna set and the means for processing the signals delivered by the receiver antenna of each antenna set in order to determine the presence or the absence of a cavity, which means are arranged so that the transmitter antenna of each set is coupled to the receiver antenna of the other set, are constituted by:
· a generator (50) suitable for delivering at least two successive pulses (51, 52, 53, ...) modulated at high frequency feeding respectively the transmitter antennas (13, 13') of both antenna sets (11, 12) for causing a cavity-detection wave to be transmitted respectively by the transmitter antenna (13) of the first set (11) and by the transmitter antenna (13') of the second set (12); and
· means (54) for analyzing firstly the signals (55) delivered by the receiver antenna (14') of the second set (12) while neutralizing the signals (56) delivered by the receiver antenna (14) of the first set (11), and secondly the signals (57) delivered by the receiver antenna (14) of the first set (11) while neutralizing the signals (58) delivered by the receiver antenna (14') of the second set (12).

10. A device according to any one of claims 1 to 9, **characterized by** the fact that each antenna is made in a plane plate and has the shape of a geometrical figure having at least two perpendicular planes of symmetry (60, 61).

11. A device according to claim 10, **characterized by** the fact that said geometrical figure is constituted by two substantially identical isosceles triangles (62, 63) joined via their principal vertices (64).

12. A device according to claim 10 or claim 11, **characterized by** the fact that the four antennas (13, 13', 14, 14') are constituted by plane plates and are situated substantially in a common plane (P).

## Patentansprüche

1. Vorrichtung, die ermöglicht, in Echtzeit durch eine Vorrichtung des Radartyps das Vorhandensein oder Nichtvorhandensein eines Hohlraums (1) im Untergrund (2) eines Verkehrswegs (3) wie beispielsweise eines Schienenwegs oder dergleichen zu bestimmen, wobei ein Hohlraum das Fehlen jeglichen vergrabenen materiellen Objekts im Untergrund ist, und die umfasst:
- einen Rahmen (10),
- eine erste und eine zweite Antennenanordnung (11, 12), die im Wesentlichen gleich sind, wobei jede Antennenanordnung (11, 12) eine Sendeantenne (13, 13') und eine Empfangsantenne (14, 14') umfasst, wobei die vier Antennen (13, 13', 14, 14') jeweils eine so genannte bevorzugte Sende- und Empfangsrichtung (15, 15') haben, wobei diese vier Antennen eine im Wesentlichen gleiche geometrische Struktur haben, an der in gleicher Weise ein räumliches Bezugssystem mit drei Bezugsachsen angebracht ist, wobei die jeweilige Sendeantenne (13, 13') und die jeweilige Empfangsantenne (14, 14') einer Antenneneinheit in der Weise relativ zueinander angeordnet sind, dass die jeweiligen Bezugsachsen der zwei räumlichen Bezugssysteme im Wesentlichen zueinander parallel sind,
- Mittel (16), um die zwei Antennenanordnungen (11, 12) mit dem Rahmen (10) zu verbinden, wobei diese letzteren Mittel (16) so beschaffen sind, dass die gegebenen bevorzugten Sende- und Empfangsrichtungen (15, 15') der vier jeweiligen Antennen (13, 13', 14, 14') zu der Oberfläche (30) des Wegs (3) im Wesentlichen senkrecht sind, wenn der Rahmen (10) in Bezug auf diesen Weg verlagert wird, wobei die zwei Antennenanordnungen (11, 12) mit dem Rahmen in der Weise verbunden sind, dass zwei der drei Bezugsachsen der zwei räumlichen Bezugssysteme, die an den jeweiligen Strukturen der Sendeantenne bzw. der Empfangsantenne einer Antennenanordnung angebracht sind, jeweils zu zwei entsprechenden Bezugsachsen der zwei räumlichen Bezugssysteme, die an den jeweiligen Strukturen der Sendeantenne bzw. der Empfangsantenne der anderen Antennenanordnung angebracht sind, senkrecht sind und dass die jeweiligen dritten Bezugsachsen der vier räumlichen Bezugssysteme im Wesentlichen parallel sind,
- Mittel (17), um den Rahmen in Bezug auf die Oberfläche des Wegs zu verlagern und
- Mittel (18), um die Sendeantenne (13, 13') jeder Antennenanordnung (11, 12) zu speisen und um die von den Empfangsantennen (14, 14') der zwei Antennenanordnungen gelieferten Signale zu verarbeiten, um das Vorhandensein oder Nichtvorhandensein eines Hohlraums (1) im Untergrund (2) zu bestimmen, wobei diese Empfangsantennen dazu ausgelegt sind, die Wellen zu detektieren, die nach der Reflexion von durch die Sendeantennen ausgesendeten Wellen an den Trennflächen, die die Hohlräume von dem Material im Untergrund trennen, erhalten werden und die nach der Reflexion mit neunzig Grad polarisiert sind.

2. Vorrichtung nach Anspruch 1, **dadurch gekennzeichnet, dass** sie wenigstens eine Schicht (40) aus einem Material, das ein dielektrisches Medium enthält, und Mittel, um die Schicht den Antennen (13-14) zuzuordnen, umfasst, derart, dass sich die Schicht bei der Verlagerung des Rahmens (10) in Bezug auf diesen Weg zwischen diesen Antennen und der Oberfläche (30) des Wegs (2) befindet.

3. Vorrichtung nach Anspruch 2, **dadurch gekennzeichnet, dass** die Materialschicht (40), die ein dielektrisches Medium enthält, aus einem wabenförmigen Zellulosematerial gebildet ist, das mit einem Fluid getränkt ist, das eine absolute Dielektrizitätskonstante mit einem Wert von im Wesentlichen gleich "33" besitzt.

4. Vorrichtung nach Anspruch 3, **dadurch gekennzeichnet, dass** das wabenförmige Zellulosematerial aus einer Fasermischung gebildet ist, wobei die Fasern zu der Oberfläche des Wegs im Wesentlichen senkrecht orientiert sind, wenn sich der Rahmen in Bezug auf diesen Weg verlagert.

5. Vorrichtung nach einem der Ansprüche 3 und 4, **dadurch gekennzeichnet, dass** das Fluid, das eine absolute Dielektrizitätskonstante mit einem Wert von im Wesentlichen gleich "33" besitzt, Wasser ist.

6. Vorrichtung nach einem der Ansprüche 1 bis 5, **dadurch gekennzeichnet, dass** wenigstens eine Antennenanordnung (11, 12) wenigstens teilweise von einer Schutzzelle (41) umgeben ist.

7. Vorrichtung nach Anspruch 6, **dadurch gekennzeichnet, dass** die Schutzzelle (41) gebildet ist durch wenigstens eine Hülle (42), die eine die Antennenanordnung umgebende Muffe bildet und aus einem elektrisch neutralen Material verwirklicht ist, und aus einem Fluid (43), das eine absolute Dielektrizitätskonstante mit einem Wert von im Wesentlichen gleich "33" besitzt und in der Hülle enthalten ist.

8. Vorrichtung nach einem der Ansprüche 1 bis 7, **dadurch gekennzeichnet, dass** die Mittel (18) zum Speisen der Sendeantenne (13, 13') jeder Antennenanordnung (11, 12) und zum Verarbeiten der von der Empfangsantenne jeder Antennenanordnung gelieferten Signale, um das Vorhandensein oder Nichtvorhandensein eines Hohlraums (1) zu bestimmen, dazu ausgelegt sind, dass die Sendeantenne (13, 13') einer Anordnung (11, 12) mit der Empfangsantenne (14', 14) der anderen Anordnung (12, 11) gekoppelt ist.

9. Vorrichtung nach Anspruch 8, **dadurch gekennzeichnet, dass** die Mittel (18) zum Speisen der Sendeantenne jeder Antennenanordnung und zum Verarbeiten der von der Empfangsantenne jeder Antennenanordnung gelieferten Signale, um das Vorhandensein oder Nichtvorhandensein eines Hohlraums zu bestimmen, die so beschaffen sind, dass die Sendeantenne einer Anordnung mit der Empfangsantenne der anderen Anordnung gekoppelt ist, gebildet sind aus:
einem Generator (50), mit dem wenigstens zwei aufeinander folgende Impulse (51, 52, 53, ...) lieferbar sind, die hochfrequenzmoduliert sind und die Sendeantennen (13, 13') der zwei Antennenanordnungen (11, 12) speisen, um das Aussenden einer Welle zur Detektion eines Hohlraums (1) durch die Sendeantenne (13) der ersten Anordnung (11) bzw. durch die Sendeantenne (13') der zweiten Anordnung (12) zu befehlen, und
Mitteln (54), um einerseits die von der Empfangsantenne (14') der zweiten Anordnung (12) gelieferten Signale (55) unter Neutralisierung der von der Empfangsantenne (14) der ersten Anordnung (11) gelieferten Signale (56) zu analysieren und um andererseits die von der Empfangsantenne (14) der ersten Anordnung (11) gelieferten Signale (57) unter Neutralisierung der von der Empfangsantenne (14') der zweiten Anordnung (12) gelieferten Signale zu analysieren.

10. Vorrichtung nach einem der Ansprüche 1 bis 9, **dadurch gekennzeichnet, dass** jede Antenne in einer ebenen Platte verwirklicht ist und die Form einer geometrischen Figur bestimmt, die wenigstens zwei senkrechte Symmetrieebenen (60, 61) besitzt.

11. Vorrichtung nach Anspruch 10, **dadurch gekennzeichnet, dass** die geometrische Figur aus zwei gleichschenkligen Dreiecken (62, 63) gebildet ist, die im Wesentlichen gleich sind und sich in Bezug auf ihren Hauptscheitelpunkt (64) gegenüberliegen.

12. Vorrichtung nach einem der Ansprüche 10 und 11, **dadurch gekennzeichnet, dass** die vier Antennen (13, 13', 14, 14'), die aus ebenen Platten gebildet sind, im Wesentlichen in derselben Ebene (P) liegen.
